# EUROPEAN PATENT SPECIFICATION

(11) **EP 3 557 845 B1**
(45) Date of publication and mention of the grant of the patent: **24.05.2023**
(21) Application number: 17879726.2
(22) Date of filing: 13.12.2017
(51) Int. Cl.: H04N 21/27, H04N 21/442, G06F 3/01, G07F 17/32

(54) **METHOD AND DEVICE FOR TRANSMITTING PANORAMIC VIDEOS, TERMINAL, SERVER AND SYSTEM**
VERFAHREN UND VORRICHTUNG ZUR ÜBERTRAGUNG VON PANORAMAVIDEOS, ENDGERÄT, SERVER UND SYSTEM
PROCÉDÉ ET DISPOSITIF DE TRANSMISSION DE VIDÉOS PANORAMIQUES, TERMINAL, SERVEUR ET SYSTÈME

(30) Priority: 13.12.2016 CN 201611149103
(43) Date of publication of application: 23.10.2019
(73) Proprietor: ZTE Corporation, Shenzhen, Guangdong 518057 (CN)
(72) Inventor: HUANG, Cheng, Shenzhen Guangdong 518057 (CN)
(74) Representative: Regimbeau
(86) International application number: PCT/CN2017/115943
(87) International publication number: WO 2018/108104

(56) References cited:
- EP-A1- 2 824 883
- EP-A1- 3 028 472
- EP-A2- 3 065 049
- EP-B1- 3 028 472
- CN-A- 105 916 060
- CN-A- 105 933 343
- CN-A- 105 939 482
- CN-A- 105 988 578
- CN-A- 106 101 847
- US-A1- 2013 204 977
- ZARE, ALIREZA ET AL.: 'HEVC-compliant Viewport-adaptive Streaming of Stereoscopic Panoramic Video' PICTURE CODING SYMPOSIUM (PCS 07 December 2016, ISSN 2472-7822 XP033086909

## Description

### TECHNICAL FIELD

The present disclosure relates to video transmission technologies and, in particular, to a method and device for transmitting a panoramic video, and a corresponding terminal requesting the panoramic video.

### BACKGROUND

Virtual Reality (VR) means to simulate and create a three-dimensional virtual world by use of computer technologies and enable users to experience a highly vivid virtual space from senses of sight, hearing, touch, and taste. With the rapid development of the VR technology, there are more and more VR (panoramic) video live broadcasts, videos on demand services, and other applications, which provides users with a very immersive video traffic experience.

Online transmission of VR panoramic videos are mainly performed in two technical manners: a full-view transmission scheme and a field of view (FOV) transmission scheme. In the full-view transmission scheme, the 360-degree surround pictures are transmitted to the terminal and all the processing procedures are implemented locally by the terminal to switch the pictures when the user turns his head. A VR panoramic video, in the same monocular visual resolution, has a much larger code rate than an ordinary plane video due to a frame rate, a bit depth, 360 degrees, and the like. The code rate of the VR panoramic video is generally 5 to 10 times that of the ordinary plane video. Taking a VR extreme panoramic video with a monocular resolution of 8K as an example, the required bandwidth reaches 5G bandwidth, which is a great challenge for the network and results in increased costs. Although, the panoramic video is of 360-degree, a viewer can only see the current field of view of the whole 360-degree panoramic video when viewing. The part which is not seen by the user occupies the network bandwidth, but is not utilized actually, wasting much network resources. In terms of this case, the industry has proposed a transmission scheme for differentiated transmission of the VR video based on the viewing angle, that is, the FOV transmission scheme. In the FOV transmission scheme, the visible picture in the current viewing angle is mainly transmitted. Generally, the 360-degree panoramic view is divided into several viewing angles, and a video file is generated for each viewing angle. The video transmitted to the terminal only includes high-resolution visual information in the user's viewing angle and low-resolution visual information in the peripheral part. The terminal requests, according to the current viewing angle pose and position of the user, the server for the video file corresponding to the viewing angle. When the head of the user rotates and the viewing angle of the user changes, the terminal requests a video file corresponding to the new viewing angle from the server. In the FOV-based transmission scheme, there are a total of 30 viewing angles. The size of the video file for each viewing angle is only 20% of the original file, and the transmission code rate is only 20% of the original code rate, which greatly reduces bandwidth requirements for viewing the VR video and improves the effective bandwidth utilization rate. This scheme also has the disadvantage that a total size of the video files for all the viewing angles is 6 times the size of the original file, which will occupy more storage space of the server. This scheme which reduces the delay with increased storage sacrifices partial image quality experience.

In EP3065049A2, The present invention provides a method, a device, and a system for interactive video display, relate to the field of multimedia technologies, and can resolve a problem in the prior art that browsing experience of a user is not real because a visible region is simply changed only according to a panning change of a location of the user. A specific solution is: acquiring posture information of a user, where the posture information includes viewing angle information of the user and location information of the user; and adjusting, according to the posture information, an unadjusted visible region, in a video, for being displayed on a client, so as to obtain an adjusted visible region currently for being displayed on the client. The embodiments of the present invention are used for performing interactive video display.

In EP3028472A1, A method is described for providing one or more tile streams to a client device for rendering a region-of-interest (ROI), wherein said ROI defines a region of a tile representation of a source video and wherein said method comprises: rendering a region-of-interest (ROI) video stream comprising a ROI of said source video; receiving ROI position information of at least one frame of said ROI video stream; and, receiving one or more tile streams that are requested the basis of said ROI position information and a spatial manifest file, said spatial manifest file defining one or more tile representations of said source video, a tile representation comprising one or more tile identifiers for identifying one or more tile streams and a tile position information defining the spatial position of said tile streams.

In EP2824883A1, a video client keeps track of the user's region of interest in a panoramic video, generates information defining the user's region of interest, and communicates the information defining the user's region of interest to a server as part of a request for the panoramic video. Upon receipt of the request, the server selects one or more segments of one or more tile of the panoramic video corresponding with the user's region of interest, and delivers the selected segments of the selected tiles to the client in response to the request. In the video client, a buffer temporarity stores the received segments, and a display requests segments from the buffer (112) to display the user's region of interest in the panoramic video.

### SUMMARY

To solve the preceding problem, embodiments of the present disclosure provide a method and device for transmitting a panoramic video, according to independent claims 11 and 14 respectively, and a method and a terminal device for requesting a panoramic video, according to independent claims 1 and 13 respectively. The invention is therefore defined by the appended independent claims. Further detailed embodiments are defined in the dependent claims.

The present disclosure provides a method for requesting a server for acquiring a first panoramic video file, and upon detecting a change in a viewing angle of a user, according to an FOV type of the first panoramic video file, requesting the server for acquiring a second panoramic video file or an auxiliary FOV video file of the first panoramic video file.

The FOV type of the first panoramic video file includes at least one of the following types:
the first panoramic video file has no predetermined FOV;
the first panoramic video file has a predetermined auxiliary FOV;
the first panoramic video file has a predetermined primary FOV; or
the first panoramic video file has the predetermined primary FOV and the predetermined auxiliary FOV

In the present disclosure, according to the FOV type of the first panoramic video file, requesting the server for acquiring the second panoramic video file or the auxiliary FOV video file of the first panoramic video file includes:
if the first panoramic video file has the predetermined auxiliary FOV, and a variance of the viewing angle of the user is greater than a first threshold, requesting the server for acquiring the auxiliary FOV video file of the first panoramic video file.

In the present disclosure, according to the FOV type of the first panoramic video file, requesting the server for acquiring the second panoramic video file or the auxiliary FOV video file of the first panoramic video file includes:
if the first panoramic video file has the predetermined primary FOV, and a variance of the viewing angle of the user is greater than a second threshold, requesting the server for acquiring the second panoramic video file.

In the present disclosure, according to the FOV type of the first panoramic video file, requesting the server for acquiring the second panoramic video file or the auxiliary FOV video file of the first panoramic video file includes:
if the first panoramic video file has the predetermined primary FOV and the predetermined auxiliary FOV, and a variance of the viewing angle of the user is less than a second threshold and greater than or equal to a third threshold, requesting the server for acquiring the auxiliary FOV video file of the first panoramic video file; otherwise, requesting the server for acquiring the second panoramic video file.

In the present disclosure, the method further includes
requesting the server for acquiring a media presentation description, where the media presentation description includes a correspondence between the viewing angle of the user and a video file which includes a panoramic video file and an auxiliary FOV video file.

In the present disclosure, the media presentation description further includes a correspondence between the panoramic video file and the auxiliary FOV video file.

In embodiments of the present disclosure, requesting the server for acquiring the auxiliary FOV video file of the first panoramic video file includes:
when a variance of the viewing angle of the user is greater than a first threshold, determining that a current viewing angle of the user is a first viewing angle; and
according to the correspondence between the viewing angle of the user and the video file, requesting the server for acquiring the auxiliary FOV video file of the first panoramic video file corresponding to the first viewing angle.

In embodiments of the present disclosure, requesting the server for acquiring the second panoramic video file includes:
when a variance of the viewing angle of the user is greater than or equal to a second threshold, determining that a current viewing angle of the user is a second viewing angle; and
according to the correspondence between the viewing angle of the user and the video file, requesting the server for acquiring the second panoramic video file corresponding to the second viewing angle.

In embodiments of the present disclosure, requesting the server for acquiring the auxiliary FOV video file of the first panoramic video file includes:
when a variance of the viewing angle of the user is less than a second threshold and greater than or equal to a third threshold, determining that a current viewing angle of the user is a third viewing angle; and
according to the correspondence between the viewing angle of the user and the video file, requesting the server for acquiring the auxiliary FOV video file of the first panoramic video file corresponding to the third viewing angle.

In embodiments of the present disclosure, the method further includes
when requesting the server for acquiring the second panoramic video file or the auxiliary FOV video file of the first panoramic video file, carrying in the request a playback starting time point of the second panoramic video file or the auxiliary FOV video file of the first panoramic video file.

Another aspect
of the present disclosure provides a method for transmitting a panoramic video. The method includes:
sending a media presentation description of a panoramic video file to a terminal, where the media presentation description includes an FOV type of the panoramic video file.

In the present disclosure, the FOV type of the panoramic video file includes at least one of the following types:
the panoramic video file has no predetermined FOV;
the first panoramic video file has a predetermined auxiliary FOV;
the panoramic video file has a predetermined primary FOV; or
the panoramic video file has the predetermined primary FOV and the predetermined auxiliary FOV

In the present disclosure, the media presentation description further includes a correspondence between the panoramic video file and its auxiliary FOV video file.

An embodiment of the present disclosure provides a device for transmitting a panoramic video. The device includes a first acquisition unit and a second acquisition unit.

The first acquisition unit is configured to request a server for acquiring a first panoramic video file.

The second acquisition unit is configured to: upon detecting a change in a viewing angle of a user, according to an FOV type of the first panoramic video file, request the server for acquiring a second panoramic video file or an auxiliary FOV video file of the first panoramic video file.

In the present disclosure, the FOV type of the first panoramic video file includes at least one of the following types:
the first panoramic video file has no predetermined FOV;
the first panoramic video file has a predetermined auxiliary FOV;
the first panoramic video file has a predetermined primary FOV; or
the first panoramic video file has the predetermined primary FOV and the auxiliary FOV

In embodiments of the present disclosure, the second acquisition unit is specifically configured to: if the first panoramic video file has the predetermined auxiliary FOV and a variance of the viewing angle of the user is greater than a first threshold, request the server for acquiring the auxiliary FOV video file of the first panoramic video file.

In embodiments of the present disclosure, the second acquisition unit is specifically configured to: if the first panoramic video file has the predetermined primary FOV and a variance of the viewing angle of the user is greater than a second threshold, request the server for acquiring the second panoramic video file.

In embodiments of the present disclosure, the second acquisition unit is specifically configured to: if the first panoramic video file has the predetermined primary FOV and the auxiliary FOV, and a variance of the viewing angle of the user is less than a second threshold and greater than or equal to a third threshold, request the server for acquiring the auxiliary FOV video file of the first panoramic video file; otherwise request the server for acquiring the second panoramic video file.

In embodiments of the present disclosure, the device further includes a third acquisition unit.

The third acquisition unit is configured to request the server for acquiring a media presentation description, where the media presentation description includes a correspondence between the viewing angle of the user and a video file which includes a panoramic video file and an auxiliary FOV video file.

In the present disclosure, the media presentation description further includes a correspondence between the panoramic video file and its auxiliary FOV video file.

In embodiments of the present disclosure, the second acquisition unit is specifically configured to: when a variance of the viewing angle of the user is greater than a first threshold, determine that a current viewing angle of the user is a first viewing angle; and according to the correspondence between the viewing angle of the user and the video file, request the server for acquiring the auxiliary FOV video file of the first panoramic video file corresponding to the first viewing angle.

In embodiments of the present disclosure, the second acquisition unit is specifically configured to: when a variance of the viewing angle of the user is greater than or equal to a second threshold, determine that a current viewing angle of the user is a second viewing angle; and according to the correspondence between the viewing angle of the user and the video file, request the server for acquiring the second panoramic video file corresponding to the second viewing angle.

In embodiments of the present disclosure, the second acquisition unit is specifically configured to: when a variance of the viewing angle of the user is less than a second threshold and greater than or equal to a third threshold, determine that a current viewing angle of the user is a third viewing angle; and according to the correspondence between the viewing angle of the user and the video file, request the server for acquiring the auxiliary FOV video file of the first panoramic video file corresponding to the third viewing angle.

In embodiments of the present disclosure, when requesting the server for acquiring the second panoramic video file or the auxiliary FOV video file of the first panoramic video file, a playback starting time point of the second panoramic video file or the auxiliary FOV video file of the first panoramic video file is carried in the request.

Another embodiment of the present disclosure provides a device for transmitting a panoramic video. The device includes a sending unit.

The sending unit is configured to send a media presentation description of a panoramic video file to a terminal, where the media presentation description includes an FOV type of the panoramic video file.

In the present disclosure, the FOV type of the panoramic video file includes at least one of the following types:
the panoramic video file has no predetermined FOV;
the first panoramic video file has a predetermined auxiliary FOV;
the panoramic video file has a predetermined primary FOV; or
the panoramic video file has the predetermined primary FOV and auxiliary FOV

In the present disclosure, the media presentation description further includes a correspondence between the panoramic video file and an auxiliary FOV video file.

An embodiment of the present disclosure provides a terminal. The terminal includes a processor and a memory storing instructions executable by the processor. When the instructions are executed by the processor, the processor is configured to:
request a server for acquiring a first panoramic video file; and
upon detecting a change in a viewing angle of a user, according to an FOV type of the first panoramic video file, request the server for acquiring a second panoramic video file or an auxiliary FOV video file of the first panoramic video file.

In the present disclosure, the FOV type of the first panoramic video file includes at least one of the following types:
the first panoramic video file has no predetermined FOV;
the first panoramic video file has a predetermined auxiliary FOV;
the first panoramic video file has a predetermined primary FOV; or
the first panoramic video file has the predetermined primary FOV and the auxiliary FOV

An embodiment of the present disclosure provides a server. The server includes a processor and a memory storing instructions executable by the processor. When the instructions are executed by the processor, the processor is configured to:
send a media presentation description of a panoramic video file to a terminal, where the media presentation description includes an FOV type of the panoramic video file.

In the present disclosure, the FOV type of the panoramic video file includes at least one of the following types:
the panoramic video file has no predetermined FOV;
the first panoramic video file has a predetermined auxiliary FOV;
the panoramic video file has a predetermined primary FOV; or
the panoramic video file has the predetermined primary FOV and auxiliary FOV

An embodiment of the present disclosure provides a system for transmitting a panoramic video. The system includes a terminal and a server.

The terminal includes a first processor and a first memory storing instructions executable by the first processor. When the instructions are executed by the first processor, the first processor is configured to: request the server for acquiring a first panoramic video file; and upon detecting a change in a viewing angle of a user, according to an FOV type of the first panoramic video file, request the server for acquiring a second panoramic video file or an auxiliary FOV video file of the first panoramic video file.

The server includes a second processor and a second memory storing instructions executable by the second processor. When the instructions are executed by the second processor, the second processor is configured to send a media presentation description of a panoramic video file to the terminal, where the media presentation description includes the FOV type of the panoramic video file.

In the present disclosure, the FOV type of the panoramic video file includes at least one of the following types:
the panoramic video file has no predetermined FOV;
the first panoramic video file has a predetermined auxiliary FOV;
the panoramic video file has a predetermined primary FOV; or
the panoramic video file has the predetermined primary FOV and auxiliary FOV

In the technical solutions provided by the embodiments of the present disclosure, the terminal requests the server for acquiring the first panoramic video file; and upon detecting a change in the viewing angle of the user, the terminal requests, according to the FOV type of the first panoramic video file, the server for acquiring the second panoramic video file or the auxiliary FOV video file of the first panoramic video file. With the technical solutions in the embodiments of the present disclosure, when the viewing angle of the user for viewing the panoramic video is changed, visual experience of an image quality in a switching process is guaranteed, thereby providing better video experience for the user as much as possible under a limited bandwidth.

### BRIEF DESCRIPTION OF DRAWINGS

The drawings described herein are used to provide a further understanding of the present disclosure and form a part of the present application. The exemplary embodiments and descriptions thereof in the present disclosure are used to explain the present disclosure and not to limit the present disclosure in any improper way. In the drawings:
FIG. 1 is a flowchart 1 of a method for transmitting a panoramic video according to an embodiment of the present disclosure;
FIG. 2 is a flowchart 2 of a method for transmitting a panoramic video according to an embodiment of the present disclosure;
FIG. 3 is a flowchart 3 of a method for transmitting a panoramic video according to an embodiment of the present disclosure;
FIG. 4 is a flowchart 4 of a method for transmitting a panoramic video according to an embodiment of the present disclosure;
FIG. 5 is a flowchart 5 of a method for transmitting a panoramic video according to an embodiment of the present disclosure;
FIG. 6 is a flowchart of a method for transmitting a panoramic video according to an embodiment 1 of the present disclosure;
FIG. 7 is a schematic diagram illustrating an application of the embodiment 1 of the present disclosure;
FIG. 8 is a flowchart of a method for transmitting a panoramic video according to an embodiment 2 of the present disclosure;
FIG. 9 is a schematic diagram illustrating an application of the embodiment 2 of the present disclosure;
FIG. 10 is a structural diagram 1 of a device for transmitting a panoramic video according to an embodiment of the present disclosure;
FIG. 11 is a structural diagram 2 of a device for transmitting a panoramic video according to an embodiment of the present disclosure; and
FIG. 12 is a structural diagram of a system for transmitting a panoramic video according to an embodiment of the present disclosure.

### DETAILED DESCRIPTION

To provide a more detailed understanding of features and content of embodiments of the present disclosure, implementation of the embodiments of the present disclosure is described below in detail with reference to the drawings. The drawings are provided for reference only and are not intended to limit the embodiments of the present disclosure.

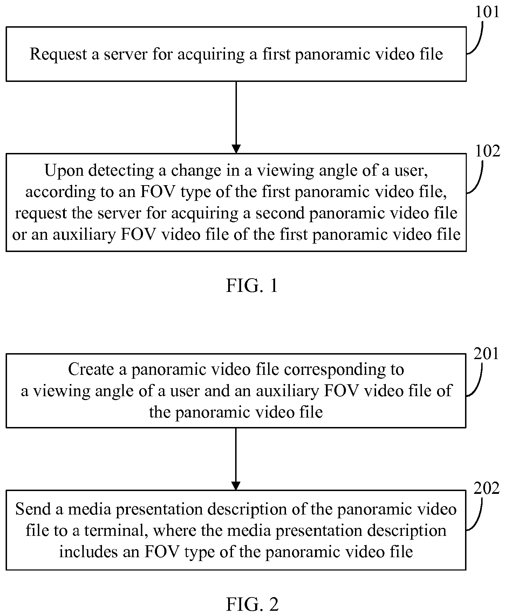

FIG. 1 is a flowchart 1 of a method for transmitting a panoramic video according to an embodiment of the present disclosure. As shown in FIG. 1, the method for transmitting a panoramic video includes steps described below.

In step 101, a request is made to a server for acquiring a first panoramic video file.

Before request the server for acquiring the first panoramic video file, the method further includes: request the server for acquiring a media presentation description.

In the embodiments of the present disclosure, the media presentation description further includes FOV type information of the panoramic video file, as shown in the following table:

**Table 1**

| Applicable set or Representation | Use | Description |
|---|---|---|
| FOV_type | Optional | non-negative integer: identifying a predetermined FOV type of a 360-degree video: |
| | | 0: indicating absence of a predetermined FOV; |
| | | 1: indicating presence of a predetermined auxiliary FOV; |
| | | 2: indicating presence of a predetermined primary FOV; |
| | | 3: indicating presence of the predetermined primary FOV and the auxiliary FOV; |
| | | -other values. |

In the embodiments of the present disclosure, the media presentation description includes a correspondence between a viewing angle of a user and a video file. The video file includes the panoramic video file and the auxiliary FOV video file.

A correspondence between the viewing angle of the user and the panoramic video file is established based on the predetermined primary FOV of the panoramic video file. Description information for the predetermined primary FOV of the panoramic video file in the media presentation description is shown in the following table:

**Table 2**

| Basic Attribute Value or Supplemental Attribute Value | Use | Description |
|---|---|---|
| Primary_yaw | Mandatory | Azimuthal angle of a primary viewing direction |
| Primary_pitch | Mandatory | Pitch angle of the primary viewing direction |
| Primary_FOV_width | Optional | Horizontal field angle of the primary FOV |
| Primary_FOV_height | Optional | Vertical field angle of the primary FOV |

A correspondence between the viewing angle of the user and the auxiliary FOV video file is established based on spatial region information of the auxiliary FOV video file. The spatial region information of the auxiliary FOV video file in the media presentation description is shown in the following table:

**Table 3**

| Basic Attribute Value or Supplemental Attribute Value | Use | Description |
|---|---|---|
| geometry_type | Mandatory | non-negative integer: defining a geometry type of the spatial region: |
| | | 0: conventional Euclidean coordinate system |
| | | 1: spherical geometric coordinate system |
| | | 2: two-dimensional planar projection index |
| | | other values. |
| region_yaw _left | Mandatory | Minimum azimuthal angle of the spatial region |
| region_yaw _right | Mandatory | Maximum azimuthal angle of the spatial region |
| region_pitch_top | Mandatory | Maximum pitch angle of the spatial region |
| region_pitch_bot | Mandatory | Minimum pitch angle of the spatial region |

The media presentation description further includes a correspondence between the panoramic video file and its auxiliary FOV video file, as shown in the following table:

**Table 4**

| Supplemental Attribute Value Parameter | Use | Description |
|---|---|---|
| fov_source_id | Optional | a list of non-negative integers for providing identifiers of the auxiliary FOV video files of the panoramic video file |

In step 102, when it is detected that the viewing angle of the user changes, according to the FOV type of the first panoramic video file, a request is made to the server for acquiring a second panoramic video file or an auxiliary FOV video file of the first panoramic video file.

Here, the FOV type of the first panoramic video file includes at least one of the types described below.

The first panoramic video file has no predetermined FOV

The first panoramic video file has the predetermined auxiliary FOV

The first panoramic video file has the predetermined primary FOV

The first panoramic video file has the predetermined primary FOV and auxiliary FOV

Accordingly, if the first panoramic video file has the predetermined auxiliary FOV and a variance of the viewing angle of the user is greater than a first threshold, the request made to the server is for acquiring the auxiliary FOV video file of the first panoramic video file.

Accordingly, if the first panoramic video file has the predetermined primary FOV and the variance of the viewing angle of the user is greater than a second threshold, the request made to the server is for acquiring the second panoramic video file.

Accordingly, if the first panoramic video file has the predetermined primary FOV and the auxiliary FOV, and the variance of the viewing angle of the user is less than the second threshold and greater than or equal to a third threshold, the request made to the server is for acquiring the auxiliary FOV video file of the first panoramic video file, otherwise the request made to the server is for acquiring the second panoramic video file.

In the case where the first panoramic video file has the predetermined auxiliary FOV, when the variance of the viewing angle of the user is greater than the first threshold, it is determined that a current viewing angle of the user is a first viewing angle; and according to the correspondence between the viewing angle of the user and the video file, the request is made to the server for acquiring the auxiliary FOV video file of the first panoramic video file corresponding to the first viewing angle.

When the variance of the viewing angle of the user is greater than or equal to the second threshold, it is determined that the current viewing angle of the user is a second viewing angle; and according to the correspondence between the viewing angle of the user and the video file, the request is made to the server for acquiring the second panoramic video file corresponding to the second viewing angle.

In the case where the first panoramic video file has the predetermined primary FOV and the auxiliary FOV, when the variance of the viewing angle of the user is less than the second threshold and greater than or equal to the third threshold, it is determined that the current viewing angle of the user is a third viewing angle; and according to the correspondence between the viewing angle of the user and the video file, the request is made to the server for acquiring the auxiliary FOV video file of the first panoramic video file corresponding to the third viewing angle.

When making the request to the server for acquiring the second panoramic video file or the auxiliary FOV video file of the first panoramic video file, a playback starting time point of the second panoramic video file or the auxiliary FOV video file of the first panoramic video file is carried in the request.

The preceding method for transmitting a panoramic video based on the FOV type supports requirements of multiple 360-degree video transmission scenarios which include the following:

**Table 5**

| Video Content | Encoding Mode | FOV Type | Transmission Scheme |
|---|---|---|---|
| Panoramic video | Single resolution | - | Single stream transmission |
| | | Auxiliary FOV | Multi-stream transmission |
| | Multiple resolutions (Non-uniform qualities) | Primary FOV | Single stream transmission |
| | | Primary FOV and auxiliary FOV | Multi-stream transmission |
| Regional video | Single resolution | Auxiliary FOV | Multi-stream transmission |

FIG. 2 is a flowchart 2 of a method for transmitting a panoramic video according to an embodiment of the present disclosure. As shown in FIG. 2, the method for transmitting a panoramic video includes steps described below.

In step 201, a panoramic video file corresponding to a viewing angle of a user and the auxiliary FOV video file are created.

In step 202, a media presentation description of the panoramic video file is sent to a terminal, where the media presentation description includes an FOV type of the panoramic video file.

Here, the FOV type of the panoramic video file includes at least one of the types described below.

The panoramic video file has no predetermined FOV.

The first panoramic video file has a predetermined auxiliary FOV.

The panoramic video file has a predetermined primary FOV.

The panoramic video file has the predetermined primary FOV and auxiliary FOV.

Furthermore, the media presentation description further includes a correspondence between the panoramic video file and the auxiliary FOV video file.

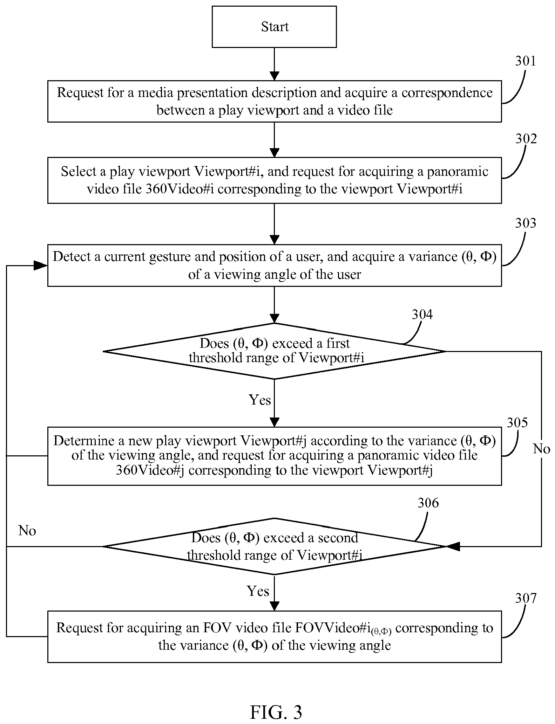

FIG. 3 is a flowchart 3 of a method for transmitting a panoramic video according to an embodiment of the present disclosure. As shown in FIG. 3, the method for transmitting a panoramic video includes steps described below.

In step 301, a terminal requests a media presentation description from a server and acquires a correspondence between a playback view angle and a video file.

In step 302, the terminal selects a playback view angle Viewport#!, and requests the server for acquiring a panoramic video file 360Video#i corresponding to the viewport Viewport#i.

In step 303, the terminal detects a current gesture and position of a user, and acquires a user view angle variance (θ, Φ).

In step 304, the terminal determines whether (θ, Φ) exceeds a first threshold range of Viewport#i. If the (θ, Φ) exceeds the first threshold range, the method proceeds to step 305. If the (θ, Φ) does not exceed the first threshold range, the method proceeds to step 306.

In step 305, the terminal determines a new playback view angle Viewport#j according to the view angle variance (θ, Φ), and makes a request to the server for acquiring a panoramic video file 360Video#j corresponding to the view angle Viewport#j. The method proceeds to step 303.

In step 306, the terminal determines whether (θ, Φ) exceeds a second threshold range of Viewport#i. If (θ, Φ) exceeds the second threshold range, the method proceeds to step 307; if (θ, Φ) does not exceed the second threshold range, the method proceeds to step 303.

In step 307, the terminal makes a request to the server for acquiring an FOV video file FOVVideo#i_{(θ,Φ)} corresponding to the viewing angle variance (θ, Φ).

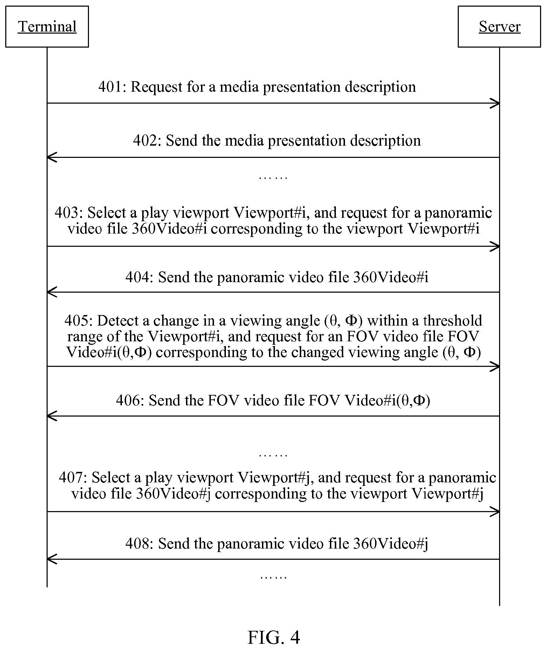

FIG. 4 is a flowchart 4 of a method for transmitting a panoramic video according to an embodiment of the present disclosure. As shown in FIG. 4, the method for transmitting a panoramic video includes steps described below.

In step 401, a terminal requests a media presentation description from a server.

In step 402, the server sends the media presentation description to the terminal.

In step 403, the terminal selects a playback view angle Viewport#!, and makes a request to the server for acquiring a panoramic video file 360Video#i corresponding to the playpack view angle Viewport#i.

In step 404, the server sends the panoramic video file 360Video#i.

In step 405, the terminal detects that the change in the viewing angle (θ, Φ) is within a threshold range of Viewport#!, and the terminal makes a request to the server for acquiring an FOV video file FOV Video#i (θ, Φ) corresponding to the changed viewing angle (θ, Φ).

In step 406, the server sends the FOV video file FOVVideo#i_{(θ}, _{Φ}).

In step 407, it is detected that the terminal changing viewing angle (θ, Φ) is beyond the threshold range of Viewport#!, and the terminal selects a playback view angle Viewport#j and requests a panoramic video file 360Video#j corresponding to the playback view angle Viewport#j from the server.

In step 408, the server sends the panoramic video file 360Video#j.

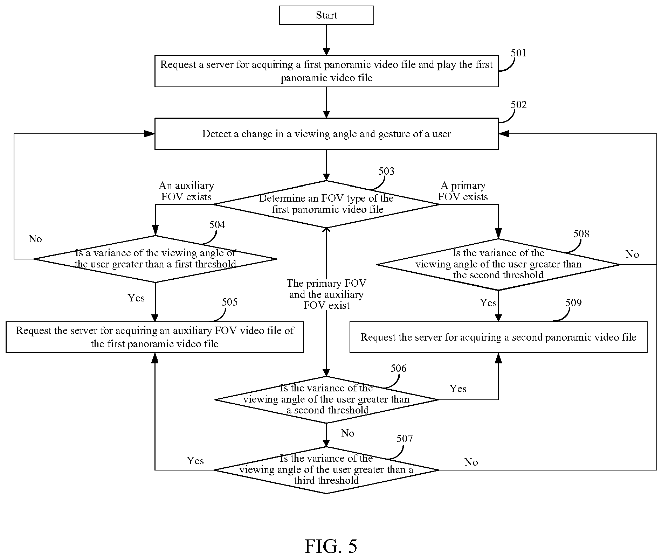

FIG. 5 is a flowchart 5 of a method for transmitting a panoramic video according to an embodiment of the present disclosure. As shown in FIG. 5, the method for transmitting a panoramic video includes steps described below.

In step 501, a terminal makes a request to a server for acquiring a first panoramic video file and plays the first panoramic video file.

In step 502, the terminal detects that a viewing angle and a gesture of a user change.

In step 503, the terminal determines an FOV type of the first panoramic video file. If the first panoramic video file has an auxiliary FOV, the method proceeds to step 504; if the first panoramic video file has a primary FOV and the auxiliary FOV, the method proceeds to step 506; and if the first panoramic video file has the primary FOV, the method proceeds to step 508.

In step 504, the terminal determines whether a variance of the viewing angle of the user is greater than a first threshold. If the variance of the viewing angle of the user is greater than the first threshold, the method proceeds to step 505; and if the variance of the viewing angle of the user is not greater than the first threshold, the, method proceeds to step 502.

In step 505, the terminal makes a request to the server for acquiring an auxiliary FOV video file of the first panoramic video file.

In step 506, the terminal determines whether the variance of the viewing angle of the user is greater than a second threshold. If the variance of the viewing angle of the user is not greater than the second threshold, the method proceeds to step 507. If the variance of the viewing angle of the user is greater than a second threshold, the method proceeds to step 509.

In step 507, the terminal determines whether the variance of the viewing angle of the user is greater than a third threshold. If the variance of the viewing angle of the user is greater than the third threshold, the method proceeds to step 505. If the variance of the viewing angle of the user is not greater than a second threshold , the method proceeds to step 502.

In step 508, the terminal determines whether the variance of the viewing angle of the user is greater than the second threshold. If the variance of the viewing angle of the user is greater than the second threshold, the method proceeds to step 509. If the variance of the viewing angle of the user is not greater than the second threshold , the method proceeds to step 502.

In step 509, the terminal makes a request to the server for acquiring a second panoramic video file.

Solutions in the embodiments of the present disclosure are further described below in conjunction with specific application scenarios.

### Embodiment 1: 360 video on demand service (unicast)

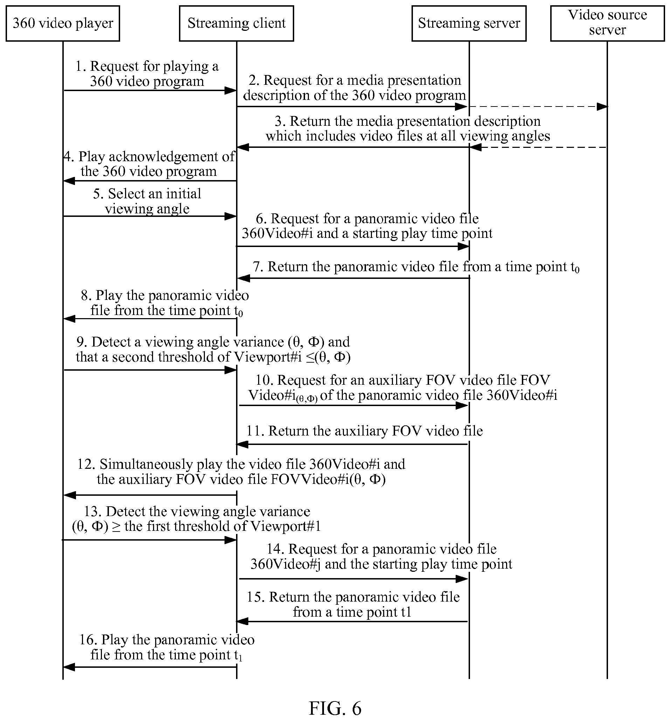

FIG. 6 is a flowchart of a method for transmitting a panoramic video according to an embodiment 1 of the present disclosure. This embodiment describes a 360 video FOV on-demand transmission. Without loss of generality, functional entities involved in this embodiment are described below.

A 360 video player, such as a virtual reality head-mounted display (HDM), can track changes in a viewing angle and a gesture of a user and magnify an image on a micro display screen through a visual optical system in front of the user's eyes so as to provide an immersive display effect of the 360 panoramic video.

A streaming client, such as a Dynamic Adaptive Streaming over HTTP (DASH) client, and provides accessing, decoding, and buffering for media resources including the 360 panoramic video and the like.

A streaming server may be any appropriate type of network server, such as a node of a content delivery network (CDN), a proxy server, a web server, or a combination thereof. The streaming client may establish a network connection with the streaming server through any access network.

A video source server implements capturing, encoding and compression, and segmentation of a video source, and divides original video content into multiple video segments with a fixed time interval. It also provides storage for a media presentation description (MPD) in the DASH.

In step 1, the 360 video player selects and requests for playing a 360 video program according to an user's instruction.

In step 2, the streaming client requests the media presentation description corresponding to the selected 360 video program from the streaming server. In practice, the streaming client may send the above request to the streaming server according to a predetermined parameter configuration (such as an access page network link). Optionally, the streaming server forwards the request to the video source server, and acquires the media presentation description corresponding to the 360 video program.

In step 3, the streaming server sends the media presentation description corresponding to the selected 360 video program. Since the 360 video FOV transmission involves video files for different viewing angles, the media presentation description sent by the server includes uniform resource locators (URLs) of video files of the 360 video program for all the viewing angles and angle relationship information.

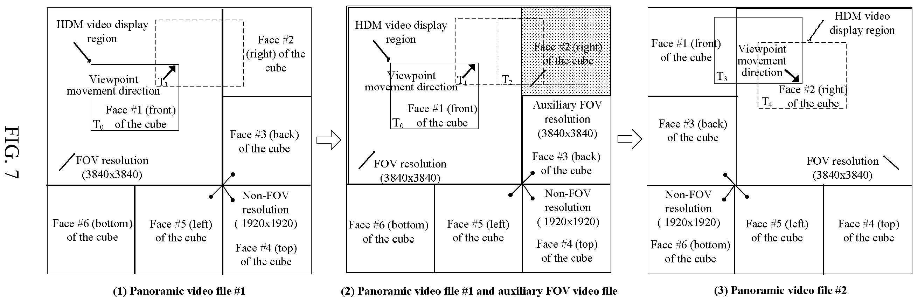

The video files related to the 360 video program in this embodiment are described below with reference to FIG. 7.

In this embodiment, the video source server pre-defines the viewing angle, gesture and position, in a spatial spherical coordinate system, of the user when the user watches the 360 video program and numbers the viewing angles from 1 to N, each of which corresponds to one viewing angle range. The video source server generates N panoramic video files 360Video#i (i=1, ..., N) according to the numbers of the viewing angle, gesture and position of the user. As shown in FIG. 7, the video source server generates six panoramic video files 360VideoCubeFace#i (i=1, ..., 6) in a non-uniform mapping manner based on regular hexahedral projection. Each panoramic video file has description information for a predetermined primary FOV, which includes a viewing direction of the primary FOV (a azimuthal angle and a pitch angle) and a field angle of the primary FOV (a horizontal field angle and a vertical field angle).

As shown in FIG. 7-(1), the predetermined primary FOV of the panoramic video file 360VideoCubeFace#1 is a face #1 (a front face) of projection planes of a cube. Assuming that a horizontal viewing angle is (0, 360) and a vertical viewing angle is (-90, 90) in a global spherical coordinate system, the viewing direction of the predetermined primary FOV of the panoramic video file 360VideoCubeFace#1 is (120, 30), and the field angle of the primary FOV is (240, 120).

Meanwhile, the video source server generates several auxiliary FOV video files FOVVideo#i(θ, Φ) (i=1, ..., N) for each panoramic video file 360Video#i, and stores them in the streaming server. As shown in FIG. 7, for each panoramic video file 360VideoCubeFace#i (i=1, ..., 6), the video source server generates 8 auxiliary FOV video files FOVVideoCubeFace#i(θ, Φ) (each primary FOV is adjacent to four projection planes of the cube, two viewing angle variation ranges (θ, Φ) and corresponding auxiliary FOVs are configured for each adjacent plane). Each auxiliary FOV video file has predetermined spatial region description information including a minimum azimuthal angle, a maximum azimuthal angle, a minimum pitch angle, and a maximum pitch angle).

As shown in FIG. 7-(2), for the primary FOV and the viewing angle variation range (θ, Φ) of an adjacent face #2 of the panoramic video file 360VideoCubeFace#1, an auxiliary FOV video file FOVVideoCubeFace#1(θ, Φ) is provided. Assuming that the horizontal viewing angle is (0, 360) and the vertical viewing angle is (-90, 90) in the global spherical coordinate system, a predetermined spatial region of the auxiliary FOV video file FOVVideoCubeFace#1(θ, Φ) is (240, 360, 30, 90).

Meanwhile, the video source server generates the corresponding media presentation description. The media presentation description carries viewing angle description information of the panoramic video file and the auxiliary FOV video files, and a correspondence between the panoramic video file and the auxiliary FOV video files.

In step 4, the streaming client returns a playback acknowledgement for the 360 video program.

In step 5, based on a configuration of the 360 video program or user selection, the 360 video player selects an initial viewing angle.

In steps 6 to 8, the streaming client requests the corresponding panoramic video file 360Video#i and a playback starting time point t0 at which the 360 video starts to be played according to the current viewing angle of the user. As shown in FIG. 7-(1), the streaming client in this embodiment requests to download the panoramic video file 360VideoCubeFace#1 according to the current viewing angle of the user and information on the primary FOV of the panoramic video file. After receiving the request, the streaming server starts to transmit panoramic video file 360VideoCubeFace#1 by addressing the time point t0 of the panoramic video file 360VideoCubeFace#1. After receiving minimum buffered data amount, the 360 video player starts playing the panoramic video file 360VideoCubeFace#1 from the time point t0.

In steps 9 to 12, at a certain moment, the user changes the viewing angle and the gesture. For each detected viewing angle variance (θ, Φ), the streaming client determines whether the viewing angle variance (θ, Φ) exceeds a first threshold range of Viewport#i corresponding to the primary FOV of the panoramic video file 360Video#i.

If the viewing angle variance (θ, Φ) exceeds the first threshold range, a new viewing angle, pose or position j is identified. The streaming client requests a corresponding panoramic video file 360Video#j and a playback starting time point t1 of the 360 video. After receiving the minimum buffer data amount with which the video playing can be supported, the 360 video player plays the panoramic video file 360Video#j from the time point t1 after the remaining panoramic video file 360Video#i is played.

If the viewing angle variance (θ, Φ) does not exceed the first threshold range, it is determined whether the viewing angle variance (θ, Φ) exceeds a second threshold range of Viewport#i corresponding to the primary FOV of the panoramic video file 360Video#i. If the viewing angle variance (θ, Φ) exceeds the second threshold range, the streaming client makes a request to acquire the auxiliary FOV video file FOVVideo#i(θ, Φ) corresponding to the viewing angle variance (θ, Φ). The 360 video player starts simultaneously playing the panoramic video file 360Video#i and the auxiliary FOV video file FOVVideo#i(θ, Φ) after receiving the minimum buffer data amount with which the video playing can be supported.

As shown in FIG. 7-(2), in this embodiment, when it is detected that the variance of the viewing angle is (θ, Φ), and a second threshold of Viewport#1≤(θ, Φ)<a first threshold of Viewport#1, the streaming client requests to download the auxiliary FOV video file FOVVideoCubeFace#1(θ, Φ) of the adjacent face #2 of the cube according to the variance (θ, Φ) of the viewing angle and spatial region information of the auxiliary FOV video file FOVVideoCubeFace#1(θ, Φ). After receiving the minimum buffer data amount, the 360 video player starts simultaneously playing the panoramic video file 360VideoCubeFace#1 and the auxiliary FOV video file FOVVideoCubeFace#1(θ, Φ).

In steps 13 to 16, as shown in FIG. 7-(3), it is detected at a certain moment that the viewing angle variance (θ, Φ) ≥ the first threshold of Viewport#1, the streaming client requests to download a panoramic video file 360VideoCubeFace#2 according to the variance (θ, Φ) of the viewing angle and information on the primary FOV of the panoramic video file. After receiving the request, the streaming server starts to transmit panoramic video file 360VideoCubeFace#2 by addressing the time point t1 of the panoramic video file 360VideoCubeFace#2. After receiving the minimum buffer data amount, the 360 video player starts playing the panoramic video file 360VideoCubeFace#2 from the time point 11.

### Embodiment 2: 360 video live broadcast (multicast)

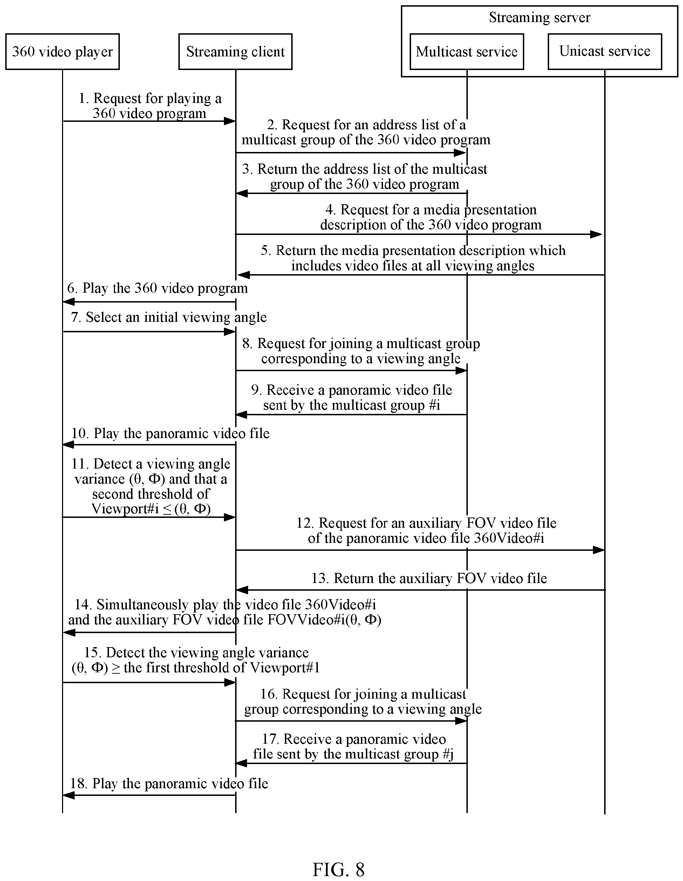

FIG. 8 is a flowchart of a method for transmitting a panoramic video according to an embodiment 2 of the present disclosure. This embodiment describes a 360 video FOV live broadcast transmission.

In step1, the 360 video player selects a 360 video program according to the user's instruction and makes a request for playing the 360 video program.

In steps 2 and 3, for a 360 video live broadcast in a multicast transmission manner, each program includes video streams of panoramic video files at multiple viewing angles, and each viewing angle corresponds to one multicast group address. The streaming client requests the streaming server to return a multicast group list and viewing angle relationship information corresponding to the selected 360 video program.

In steps 4 and 5, to transmit an auxiliary FOV video file in a unicast manner, the streaming client request the streaming server to return a media presentation description corresponding to the selected 360 video program. Since the 360 video FOV transmission involves video files at different viewing angles, the media presentation description returned by the server includes URLs of video files of the 360 video program at all the viewing angles and information on a relationship between the video files and the viewing angles.

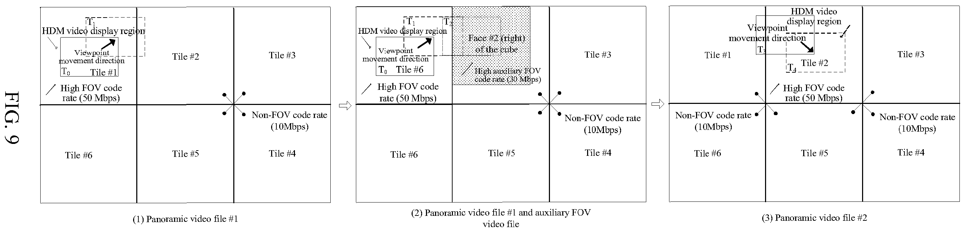

The video files related to the 360 video program in this embodiment are described below with reference to FIG. 9.

In this embodiment, the video source server pre-defines the viewing angle, gesture and position, in a spatial spherical coordinate system, of the user when the user watches the 360 video program and numbers the viewing angles from 1 to N, each of which corresponds to one viewing angle range. The video source server generates N panoramic video files 360Video#i(i=1..N) according to the numbers of the viewing angle, gesture and position of the user. As shown in FIG. 9, the video source server generates six panoramic video files 360VideoERPTile#i (i=1, ..., 6) in a non-uniform encoding manner based on rectangular projection. Each panoramic video file has description information for a predetermined primary FOV, which includes a viewing direction of the primary FOV (an azimuthal angle and a pitch angle) and a field angle of the primary FOV (a horizontal field angle and a vertical field angle).

As shown in FIG. 9-(1), a predetermined primary FOV of the panoramic video file 360VideoERPTile#1 is a tile #1 of projection planes of a rectangle. Assuming that a horizontal viewing angle is (0, 360) and a vertical viewing angle is (-90, 90) in a global spherical coordinate system, the viewing direction of the predetermined primary FOV of the panoramic video file 360VideoERPTile#1 is (60, 45), and the field angle of the primary FOV is (120, 80).

Meanwhile, the video source server generates several auxiliary FOV video files FOVVideo#i(θ, Φ) (i=1, ..., N) for each panoramic video file 360Video#i, and stores them in the streaming server. As shown in FIG. 9, for each panoramic video file 360VideoERPTile#i (i=1, ..., 6), the video source server generates 4 auxiliary FOV video files FOVVideoERPTile#i(θ,Φ) (each primary FOV is adjacent to at most four tiles among the projection planes of the rectangle, and each of tile is configured with one viewing angle variation range (θ, Φ) and corresponding auxiliary FOV). Each auxiliary FOV video file has predetermined spatial region description information including a minimum azimuthal angle, a maximum azimuthal angle, a minimum pitch angle, and a maximum pitch angle).

As shown in FIG. 9-(2), for the primary FOV and the viewing angle variation range (θ, Φ) of an adjacent tile #2 of the panoramic video file 360VideoERPTile#1, an auxiliary FOV video file FOVVideoERPTile#1(θ,Φ) is provided. Assuming that the horizontal viewing angle is (0, 360) and the vertical viewing angle is (-90, 90) in the global spherical coordinate system, a predetermined spatial region of the auxiliary FOV video file FOVVideoERPTile#1(θ,Φ) is (120, 220, 15, 90).

Meanwhile, the video source server generates the corresponding media presentation description. The media presentation description carries viewing angle description information of the panoramic video file and the auxiliary FOV video files, and a correspondence between the panoramic video file and the auxiliary FOV video files.

In step 6, the streaming client returns a playback acknowledgement for the 360 video program.

In step 7, based on a configuration of the 360 video program or user selection, the 360 video player selects an initial viewing angle.

In steps 8 to 10, according to the multicast group list and the viewing angle relationship information, the streaming client makes a request for joining a multicast group to receive the panoramic video file 360Video#i corresponding to the current viewing angle of the user. As shown in FIG. 9-(1), in this embodiment, the streaming client makes the requests for joining a multicast group #1 to receive the panoramic video file 360VideoERPTile#1. After receiving minimum buffer data amount, the 360 video player starts playing the panoramic video file 360VideoERPTile#1.

In steps 11 to 14, at a certain moment, the user changes the viewing angle and the gesture. For each detected variance (θ, Φ) of the viewing angle, the streaming client determines whether the variance (θ, Φ) of the viewing angle exceeds a first threshold range of Viewport#i corresponding to the primary FOV of the panoramic video file 360Video#i.

If the viewing angle variance (θ, Φ) exceeds the first threshold range, a new viewing angle, gesture or position j is identified. According to the multicast group list and the viewing angle relationship information, the streaming client makes a request for joining a multicast group #j to receive the corresponding panoramic video file 360Video#j. After receiving the minimum buffer data amount with which the playing can be supported, the 360 video player starts playing the panoramic video file 360Video#j.

If the viewing angle variance (θ, Φ) does not exceed the first threshold range, it is determined whether the viewing angle variance (θ, Φ) exceeds a second threshold range of Viewport#i corresponding to the primary FOV of the panoramic video file 360Video#i. If the viewing angle variance (θ, Φ) exceeds the second threshold range, the streaming client makes a request for acquiring the auxiliary FOV video file FOVVideo#i(θ, Φ) corresponding to the viewing angle variance (θ, Φ) in the unicast manner. The 360 video player starts simultaneously playing the panoramic video file 360Video#i and the auxiliary FOV video file FOVVideo#i(θ, Φ) after receiving the minimum buffer data amount which can support playback.

As shown in FIG. 9-(2), in this embodiment, when it is detected that the viewing angle variance is (θ, Φ), and a second threshold of Viewport#1≤(θ, Φ)<a first threshold of V'iewport#1, the streaming client requests the auxiliary FOV video file FOVVideoERPTile#1(θ, Φ) of the adjacent tile #2 among the projection planes of the rectangle according to the viewing angle variance (θ, Φ) and spatial region information of the auxiliary FOV video file FOVVideoERPTile#1(θ, Φ). After receiving the minimum buffer data amount, the 360 video player starts simultaneously playing the panoramic video file 360VideoERPTile#1 and the auxiliary FOV video file FOVVideoERPTile#1(θ, Φ).

In steps 15 to 18, as shown in FIG. 9-(3), it is detected at a certain moment that the viewing angle variance (θ, Φ)≥the first threshold of V'iewport#1, the streaming client makes the request for joining the multicast group #j to receive a panoramic video file 360VideoERPTile#2 according to the multicast group list and the viewing angle relationship information. After receiving the minimum buffer data amount, the 360 video player starts playing the panoramic video file 360VideoCubeFace#2.

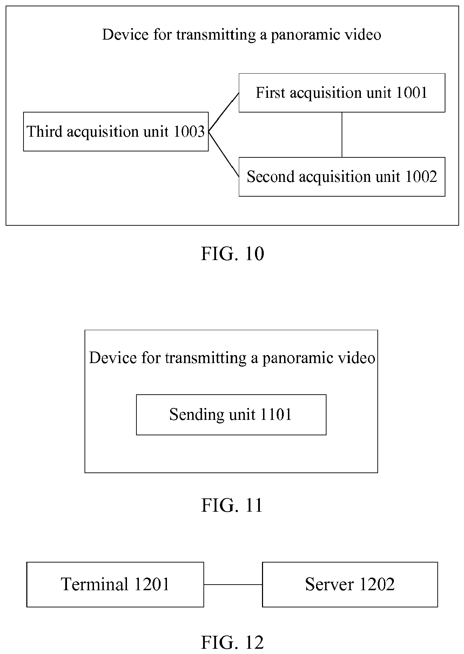

FIG. 10 is a structural diagram 1 of a device for transmitting a panoramic video according to an embodiment of the present disclosure. As shown in FIG. 10, the device includes a first acquisition unit 1001 and a second acquisition unit 1002.

The first acquisition unit 1001 is configured to make a request to a server for acquiring a first panoramic video file.

The second acquisition unit 1002 is configured to: when it is detected that a viewing angle of a user changes, according to an FOV type of the first panoramic video file, make a request to the server for acquiring a second panoramic video file or an auxiliary FOV video file of the first panoramic video file.

In the embodiments of the present disclosure, the FOV type of the first panoramic video file includes at least one of the types described below.

The first panoramic video file has no predetermined FOV

The first panoramic video file has a predetermined auxiliary FOV

The first panoramic video file has a predetermined primary FOV

The first panoramic video file has the predetermined primary FOV and the auxiliary FOV

In the embodiments of the present disclosure, the second acquisition unit 1002 is specifically configured to: if the first panoramic video file has the predetermined auxiliary FOV and a variance of the viewing angle of the user is greater than a first threshold, request the server for acquiring the auxiliary FOV video file of the first panoramic video file.

In the embodiments of the present disclosure, the second acquisition unit 1002 is specifically configured to: if the first panoramic video file has the predetermined primary FOV and the variance of the viewing angle of the user is greater than a second threshold, request the server for acquiring the second panoramic video file.

In the embodiments of the present disclosure, the second acquisition unit 1002 is specifically configured to: if the first panoramic video file has the predetermined primary FOV and the auxiliary FOV, and the variance of the viewing angle of the user is less than the second threshold and greater than or equal to a third threshold, request the server for acquiring the auxiliary FOV video file of the first panoramic video file; otherwise request the server for acquiring the second panoramic video file.

In the embodiments of the present disclosure, the device further includes a third acquisition unit 1003.

The third acquisition unit 1003 is configured to request the server for acquiring a media presentation description. The media presentation description includes a correspondence between the viewing angle of the user and a video file. The video file includes a panoramic video file and an auxiliary FOV video file.

In the embodiments of the present disclosure, the media presentation description further includes a correspondence between the panoramic video file and the auxiliary FOV video file.

In the embodiments of the present disclosure, in the case where the first panoramic video file has the predetermined auxiliary FOV, the second acquisition unit 1002 is specifically configured to: when the variance of the viewing angle of the user is greater than the first threshold, determine that a current viewing angle of the user is a first viewing angle; and according to the correspondence between the viewing angle of the user and the video file, request the server for acquiring the auxiliary FOV video file of the first panoramic video file corresponding to the first viewing angle.

In the embodiments of the present disclosure, the second acquisition unit 1002 is specifically configured to: when the variance of the viewing angle of the user is greater than or equal to the second threshold, determine that the current viewing angle of the user is a second viewing angle; and according to the correspondence between the viewing angle of the user and the video file, request the server for acquiring the second panoramic video file corresponding to the second viewing angle.

In the embodiments of the present disclosure, in the case where the first panoramic video file has the predetermined primary FOV and the auxiliary FOV, the second acquisition unit 1002 is specifically configured to: when the variance of the viewing angle of the user is less than the second threshold and greater than or equal to the third threshold, determine that the current viewing angle of the user is a third viewing angle; and according to the correspondence between the viewing angle of the user and the video file, request the server for acquiring the auxiliary FOV video file of the first panoramic video file corresponding to the third viewing angle.

In the embodiments of the present disclosure, when the request is made to the server for acquiring the second panoramic video file or the auxiliary FOV video file of the first panoramic video file, a playback starting time point of the second panoramic video file or the auxiliary FOV video file of the first panoramic video file is carried in the request.

It should be understood by those skilled in the art that implementation of functions of various units of the device for transmitting a panoramic video in FIG. 10 may be understood with reference to the related description of the method for transmitting a panoramic video described above. The functions of the various units of the device for transmitting a panoramic video in FIG. 10 may be implemented by programs running on a processor or by specific logic circuits.

Based on the device for transmitting a panoramic video in FIG. 10, the embodiments of the present disclosure further provide a terminal. The terminal includes a processor and a memory storing instructions executable by the processor. When the instructions are executed by the processor, the processor is configured to perform steps described below.

A request is made to a server to acquire a first panoramic video file.

When it is detected that a viewing angle of a user changes, a request is made, according to an FOV type of the first panoramic video file, to the server to acquire a second panoramic video file or an auxiliary FOV video file of the first panoramic video file.

It should be understood by those skilled in the art that the processor in the terminal can also execute all the functions of the device for transmitting a panoramic video in FIG. 10.

FIG. 11 is a structural diagram 2 of a device for transmitting a panoramic video according to an embodiment of the present disclosure. As shown in FIG. 11, the device includes a sending unit 1001.

The sending unit 1101 is configured to send a media presentation description of a panoramic video file to a terminal. The media presentation description includes an FOV type of the panoramic video file.

In the embodiments of the present disclosure, the FOV type of the panoramic video file includes at least one of the types described below.

The panoramic video file has no predetermined FOV

The first panoramic video file has a predetermined auxiliary FOV

The panoramic video file has a predetermined primary FOV

The panoramic video file has the predetermined primary FOV and the auxiliary FOV

In the embodiments of the present disclosure, the media presentation description further includes a correspondence between the panoramic video file and an auxiliary FOV video file.

It should be understood by those skilled in the art that implementation of functions of various units of the device for transmitting a panoramic video shown in FIG. 11 may be understood with reference to the related description of the method for transmitting a panoramic video described above. The functions of the various units of the device for transmitting a panoramic video in FIG. 11 may be implemented by programs running on a processor or by specific logic circuits.

Based on the device for transmitting a panoramic video in FIG. 11, the embodiments of the present disclosure further provide a server. The server includes a processor and a memory storing instructions executable by the processor. When the instructions are executed by the processor, the processor is configured to perform a step described below.

A media presentation description of a panoramic video file is sent to a terminal. The media presentation description includes an FOV type of the panoramic video file.

It should be understood by those skilled in the art that the processor in the server can also execute all the functions of the device for transmitting a panoramic video in FIG. 11.

FIG. 12 is a structural diagram of a system for transmitting a panoramic video according to an embodiment of the present disclosure. As shown in FIG. 12, the system includes a terminal 1201 and a server 1202.

The terminal 1201 includes a first processor and a first memory storing instructions executable by the first processor. When the instructions are executed by the first processor, the first processor is configured to perform the method steps in FIG. 1.

The server 1202 includes a second processor and a second memory storing instructions executable by the second processor. When the instructions are executed by the second processor, the second processor is configured to perform the method steps in FIG. 2.

It should be understood by those skilled in the art that the embodiments of the present disclosure may be provided as methods, systems, or computer program products. Therefore, the present disclosure may adopt a form of a hardware embodiment, a software embodiment, or a combination of hardware and software embodiments. In addition, the present disclosure may adopt a form of a computer program product implemented on one or more computer-usable storage media (including, but not limited to, a disk memory, an optical memory and the like) which include computer-usable program codes.

The present disclosure is described with reference to flowcharts and/or block diagrams of methods, apparatus (systems) and computer program products according to the embodiments of the present disclosure. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing apparatus to produce a machine so that instructions executed by a computer or the processor of another programmable data processing apparatus produce a means for implementing functions specified in one or more flows in the flowcharts and/or one or more blocks in the block diagrams.

These computer program instructions may also be stored in a computer-readable memory which may direct the computer or another programmable data processing apparatus to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions may also be loaded onto the computer or another programmable data processing apparatus so that a series of operation steps are performed on the computer or another programmable apparatus to produce processing implemented by the computer. Therefore, instructions executed on the computer or another programmable apparatus provide steps for implementing the functions specified in one or more flows in the flowcharts and/or one or more blocks in the block diagrams.

The above are only preferred embodiments of the present disclosure and are not intended to limit the scope of the present disclosure which is solely defined by the appended claims.

### INDUSTRIAL APPLICABILITY

In the technical solutions provided by the embodiments of the present disclosure, the terminal requests the server for acquiring the first panoramic video file; and when it is detected that the viewing angle of the user changes, according to the FOV type of the first panoramic video file, the terminal requests the server for acquiring the second panoramic video file or the auxiliary FOV video file of the first panoramic video file. With the technical solutions in the embodiments of the present disclosure, when the viewing angle of the user for viewing the panoramic video is changed, visual experience of an image quality in a switching process is guaranteed, thereby providing better video experience for the user as much as possible under a limited bandwidth.

## Claims

1. A method for a user terminal device requesting a panoramic video, comprising:
requesting a server for acquiring a media presentation description which comprises field of view, FOV, type information;
requesting (101) the server for acquiring a first panoramic video file based on the media presentation description; and
upon detecting a change in a viewing angle of the user, the method being **characterized in**:
determining a FOV type of the first panoramic video file (503), wherein the FOV type of the first panoramic video file comprises at least one of the following:
the first panoramic video file has no predetermined FOV
the first panoramic video file has a predetermined auxiliary FOV;
the first panoramic video file has a predetermined primary FOV; or
the first panoramic video file has the predetermined primary FOV and the auxiliary FOV;
wherein, if the first panoramic video file has an auxiliary FOV, or a primary FOV, or a primary FOV and an auxiliary FOV, requesting (102) the server, according to the FOV type of the first panoramic video file and the change of the viewing angle of the user, a second panoramic video file or an auxiliary FOV video file of the first panoramic video file;
wherein requesting (102), according the FOV type of the first panoramic video file and the change of the viewing angle of the user, the server for acquiring the second panoramic video file (509) or the auxiliary FOV video file of the first panoramic video file (505) comprises:
requesting in a single stream, in a case where the first panoramic video file has the predetermined primary FOV; or
requesting in multiple streams, in a case where the first panoramic video file has the predetermined auxiliary FOV

2. The method for transmitting a panoramic video of claim 1, wherein the requesting, according to the FOV type of the first panoramic video file and the change of the viewing angle of the user, the server for acquiring the second panoramic video file or the auxiliary FOV video file of the first panoramic video file comprises:
if the first panoramic video file has the predetermined auxiliary FOV, and a variance of the viewing angle of the user is greater than a first threshold, requesting the server for acquiring the auxiliary FOV video file of the first panoramic video file.

3. The method for transmitting a panoramic video of claim 1, wherein the requesting, according to the FOV type of the first panoramic video file and the change of the viewing angle of the user, the server for acquiring the second panoramic video file or the auxiliary FOV video file of the first panoramic video file comprises:
if the first panoramic video file has the predetermined primary FOV, and a variance of the viewing angle of the user is greater than a second threshold, requesting the server for acquiring the second panoramic video file.

4. The method for transmitting a panoramic video of claim 1, wherein the requesting, according to the FOV type of the first panoramic video file and the change of the viewing angle of the user, the server for acquiring the second panoramic video file or the auxiliary FOV video file of the first panoramic video file comprises:
if the first panoramic video file has the predetermined primary FOV and the auxiliary FOV, and a variance of the viewing angle of the user is less than a second threshold and greater than or equal to a third threshold, requesting the server for acquiring the auxiliary FOV video file of the first panoramic video file; otherwise, requesting the server for acquiring the second panoramic video file.

5. The method for transmitting a panoramic video of claim 1, further comprising:
requesting the server for acquiring a media presentation description, wherein the media presentation description comprises a correspondence between the viewing angle of the user and a video file, wherein the video file comprises a panoramic video file and an auxiliary FOV video file.

6. The method for transmitting a panoramic video of claim 5, wherein the media presentation description further comprises a correspondence between the panoramic video file and the auxiliary FOV video file.

7. The method for transmitting a panoramic video of claim 5, wherein requesting the server for acquiring the auxiliary FOV video file of the first panoramic video file comprises:
when a variance of the viewing angle of the user is greater than a first threshold, determining that a current viewing angle of the user is a first viewing angle; and
according to the correspondence between the viewing angle of the user and the video file, requesting the server for acquiring the auxiliary FOV video file of the first panoramic video file corresponding to the first viewing angle.

8. The method for transmitting a panoramic video of claim 5, wherein the requesting the server for acquiring the second panoramic video file comprises:
when a variance of the viewing angle of the user is greater than or equal to a second threshold, determining that a current viewing angle of the user is a second viewing angle; and
according to the correspondence between the viewing angle of the user and the video file, requesting the server for acquiring the second panoramic video file corresponding to the second viewing angle.

9. The method for transmitting a panoramic video of claim 5, wherein the requesting the server for acquiring the auxiliary FOV video file of the first panoramic video file comprises:
when a variance of the viewing angle of the user is less than a second threshold and greater than or equal to a third threshold, determining that a current viewing angle of the user is a third viewing angle; and
according to the correspondence between the viewing angle of the user and the video file, requesting the server for acquiring the auxiliary FOV video file of the first panoramic video file corresponding to the third viewing angle.

10. The method for transmitting a panoramic video of any one of claims 1 to 9, further comprising:
when requesting the server for acquiring the second panoramic video file or the auxiliary FOV video file of the first panoramic video file, carrying in the request a playback starting time point of the second panoramic video file or the auxiliary FOV video file of the first panoramic video file.

11. A method for a server for transmitting a panoramic video, comprising:
sending (202) a media presentation description of a panoramic video file to a terminal based on a terminal request, wherein the media presentation description comprises field of view, FOV, type information; the method being **characterized in**:
sending (406) a FOV video file based on a terminal request for acquiring an FOV video file corresponding to a changed viewing angle or sending (408) the panoramic video file based on a terminal request for acquiring a panoramic video file corresponding to a playback view angle;
wherein the FOV type of the panoramic video file comprises at least one of the following:
the panoramic video file has no predetermined FOV;
the panoramic video file has a predetermined auxiliary FOV;
the panoramic video file has a predetermined primary FOV; or
the panoramic video file has the predetermined primary FOV and the auxiliary FOV;
wherein sending (406) the FOV video file based on a terminal request for acquiring an FOV video file or an auxiliary FOV video file corresponding to a changed viewing angle or sending (408) the panoramic video file based on a terminal request for acquiring a panoramic video file corresponding to a playback view angle comprises:
sending in a single stream, in a case where the panoramic video file has the predetermined primary FOV; or
sending in multiple streams, in a case where the panoramic video file has the predetermined auxiliary FOV

12. The method for transmitting a panoramic video of claim 11, wherein the media presentation description further comprises a correspondence between the panoramic video file and the auxiliary FOV video file.

13. A terminal, comprising a processor and a memory storing instructions executable by the processor, wherein when the instructions are executed by the processor, the processor is configured to perform the method of any one of claims 1 to 10.

14. A server, comprising a processor and a memory storing instructions executable by the processor, wherein when the instructions are executed by the processor, the processor is configured to perform the method of any one of claims 11 to 12.

## Patentansprüche

1. Verfahren für eine Benutzerendgerätevorrichtung, die ein Panoramavideo anfordert, umfassend:
Auffordern eines Servers dazu, eine Mediendarstellungsbeschreibung zu erfassen, welche eine Information vom Typ Sichtfeld, Field of View, FOV, umfasst;
Auffordern (101) des Servers dazu, eine erste Panoramavideodatei auf Basis der Mediendarstellungsbeschreibung zu erfassen; und
wobei das Verfahren bei Erkennen einer Veränderung eines Blickwinkels des Benutzers **gekennzeichnet ist durch**:
Bestimmen eines FOV-Typs der ersten Panoramavideodatei (503), wobei der FOV-Typ der ersten Panoramavideodatei mindestens eines der Folgenden umfasst:
die erste Panoramavideodatei weist kein vorbestimmtes FOV auf
die erste Panoramavideodatei weist ein vorbestimmtes zusätzliches FOV auf;
die erste Panoramavideodatei weist ein vorbestimmtes primäres FOV auf; oder
die erste Panoramavideodatei weist das vorbestimmte primäre FOV und das zusätzliche FOV auf;
wobei, wenn die erste Panoramavideodatei ein zusätzliches FOV, oder ein primäres FOV, oder ein primäres FOV und ein zusätzliches FOV aufweist, Auffordern (102) des Servers gemäß dem FOV-Typ der ersten Panoramavideodatei und der Veränderung des Blickwinkels des Benutzers, eine zweite Panoramavideodatei oder eine Videodatei mit einem zusätzlichen FOV der ersten Panoramavideodatei;
wobei das Auffordern (102) des Servers gemäß dem FOV-Typ der ersten Panoramavideodatei und der Veränderung des Blickwinkels des Benutzers dazu, die zweite Panoramavideodatei (509) oder die Videodatei mit dem zusätzlichen FOV der ersten Panoramavideodatei (505) zu erfassen, umfasst:
Anfordern in einem einzelnen Strom in dem Fall, in dem die erste Panoramavideodatei das vorbestimmte primäre FOV aufweist; oder
Anfordern in mehreren Strömen in dem Fall, in dem die erste Panoramavideodatei das vorbestimmte zusätzliche FOV aufweist.

2. Verfahren zum Übertragen eines Panoramavideos nach Anspruch 1, wobei das Auffordern des Servers gemäß dem FOV-Typ der ersten Panoramavideodatei und der Veränderung des Blickwinkels des Benutzers dazu, die zweite Panoramavideodatei oder die Videodatei mit dem zusätzlichen FOV der ersten Panoramavideodatei zu erfassen, umfasst:
wenn die erste Panoramavideodatei das vorbestimmte zusätzliche FOV aufweist, und eine Varianz des Blickwinkels des Benutzers größer ist als eine erste Schwelle, Auffordern des Servers dazu, die Videodatei mit dem zusätzlichen FOV der ersten Panoramavideodatei zu erfassen.

3. Verfahren zum Übertragen eines Panoramavideos nach Anspruch 1, wobei das Auffordern des Servers gemäß dem FOV-Typ der ersten Panoramavideodatei und der Veränderung des Blickwinkels des Benutzers dazu, die zweite Panoramavideodatei oder die Videodatei mit dem zusätzlichen FOV der ersten Panoramavideodatei zu erfassen, umfasst:
wenn die erste Panoramavideodatei das vorbestimmte primäre FOV aufweist, und eine Varianz des Blickwinkels des Benutzers größer ist als eine zweite Schwelle, Auffordern des Servers dazu, die zweite Panoramavideodatei zu erfassen.

4. Verfahren zum Übertragen eines Panoramavideos nach Anspruch 1, wobei das Auffordern des Servers gemäß dem FOV-Typ der ersten Panoramavideodatei und der Veränderung des Blickwinkels des Benutzers dazu, die zweite Panoramavideodatei oder die Videodatei mit dem zusätzlichen FOV der ersten Panoramavideodatei zu erfassen, umfasst:
wenn die erste Panoramavideodatei das vorbestimmte primäre FOV und das zusätzliche FOV aufweist, und eine Varianz des Blickwinkels des Benutzers kleiner ist als eine zweite Schwelle und größer als oder gleich einer dritten Schwelle, Auffordern des Servers dazu, die Videodatei mit dem zusätzlichen FOV der ersten Panoramavideodatei zu erfassen; andernfalls Auffordern des Servers dazu, die zweite Panoramavideodatei zu erfassen.

5. Verfahren zum Übertragen eines Panoramavideos nach Anspruch 1, weiter umfassend:
Auffordern des Servers dazu, eine Mediendarstellungsbeschreibung zu erfassen, wobei die Mediendarstellungsbeschreibung eine Entsprechung zwischen dem Blickwinkel des Benutzers und einer Videodatei umfasst, wobei die Videodatei eine Panoramavideodatei und eine Videodatei mit einem zusätzlichen FOV umfasst.

6. Verfahren zum Übertragen eines Panoramavideos nach Anspruch 5, wobei die Mediendarstellungsbeschreibung weiter eine Entsprechung zwischen der Panoramavideodatei und der Videodatei mit dem zusätzlichen FOV umfasst.

7. Verfahren zum Übertragen eines Panoramavideos nach Anspruch 5, wobei das Auffordern des Servers dazu, die Videodatei mit dem zusätzlichen FOV der ersten Panoramavideodatei zu erfassen, umfasst:
wenn eine Varianz des Blickwinkels des Benutzers größer ist als eine erste Schwelle, Bestimmen, dass ein aktueller Blickwinkel des Benutzers ein erster Blickwinkel ist; und
Auffordern des Servers gemäß der Entsprechung zwischen dem Blickwinkel des Benutzers und der Videodatei dazu, die Videodatei mit dem zusätzlichen FOV der ersten Panoramavideodatei, die dem ersten Blickwinkel entspricht, zu erfassen.

8. Verfahren zum Übertragen eines Panoramavideos nach Anspruch 5, wobei das Auffordern des Servers dazu, die zweite Panoramavideodatei zu erfassen, umfasst:
wenn eine Varianz des Blickwinkels des Benutzers größer als oder gleich einer zweiten Schwelle ist, Bestimmen, dass ein aktueller Blickwinkel des Benutzers ein zweiter Blickwinkel ist; und
Auffordern des Servers gemäß der Entsprechung zwischen dem Blickwinkel des Benutzers und der Videodatei dazu, die zweite Panoramavideodatei, die dem zweiten Blickwinkel entspricht, zu erfassen.

9. Verfahren zum Übertragen eines Panoramavideos nach Anspruch 5, wobei das Auffordern des Servers dazu, die Videodatei mit dem zusätzlichen FOV der ersten Panoramavideodatei zu erfassen, umfasst:
wenn eine Varianz des Blickwinkels des Benutzers kleiner ist als eine zweite Schwelle und größer als oder gleich einer dritten Schwelle, Bestimmen, dass ein aktueller Blickwinkel des Benutzers ein dritter Blickwinkel ist; und
Auffordern des Servers gemäß der Entsprechung zwischen dem Blickwinkel des Benutzers und der Videodatei dazu, die Videodatei mit dem zusätzlichen FOV der ersten Panoramavideodatei, die dem dritten Blickwinkel entspricht, zu erfassen.

10. Verfahren zum Übertragen eines Panoramavideos nach einem der Ansprüche 1 bis 9, weiter umfassend:
beim Auffordern des Servers dazu, die zweite Panoramavideodatei oder die Videodatei mit dem zusätzlichen FOV der ersten Panoramavideodatei zu erfassen, Übermitteln eines Wiedergabe-Startzeitpunkts der zweiten Panoramavideodatei oder der Videodatei mit dem zusätzlichen FOV der ersten Panoramavideodatei in der Anforderung.

11. Verfahren für einen Server zum Übertragen eines Panoramavideos, umfassend:
Senden (202) einer Mediendarstellungsbeschreibung einer Panoramavideodatei an ein Endgerät auf Basis einer Anforderung des Endgeräts, wobei die Mediendarstellungsbeschreibung Informationen vom Typ Sichtfeld, FOV, umfasst; wobei das Verfahren **gekennzeichnet ist durch**:
Senden (406) einer FOV-Videodatei auf Basis einer Aufforderung eines Endgeräts dazu, eine FOV-Videodatei zu erfassen, die einem geänderten Blickwinkel entspricht, oder Senden (408) der Panoramavideodatei auf Basis einer Aufforderung eines Endgeräts dazu, eine Panoramavideodatei zu erfassen, die einem Wiedergabeblickwinkel entspricht;
wobei der FOV-Typ der Panoramavideodatei mindestens eines der Folgenden umfasst:
die Panoramavideodatei weist kein vorbestimmtes FOV auf;
die Panoramavideodatei weist ein vorbestimmtes zusätzliches FOV auf;
die Panoramavideodatei weist ein vorbestimmtes primäres FOV auf; oder
die Panoramavideodatei weist das vorbestimmte primäre FOV und das zusätzliche FOV auf;
wobei das Senden (406) der FOV-Videodatei auf Basis einer Aufforderung eines Endgeräts dazu, eine FOV-Videodatei oder eine Videodatei mit einem zusätzlichem FOV, die einem geänderten Blickwinkel entspricht, zu erfassen, oder das Senden (408) der Panoramavideodatei auf Basis einer Aufforderung eines Endgeräts dazu, eine Panoramavideodatei zu erfassen, die einem Wiedergabeblickwinkel entspricht, umfasst:
Senden in einem einzelnen Strom in dem Fall, in dem die Panoramavideodatei das vorbestimmte primäre FOV aufweist; oder
Senden in mehreren Strömen in dem Fall, in dem die Panoramavideodatei das vorbestimmte zusätzliche FOV aufweist.

12. Verfahren zum Übertragen eines Panoramavideos nach Anspruch 11, wobei die Mediendarstellungsbeschreibung weiter eine Entsprechung zwischen der Panoramavideodatei und der Videodatei mit dem zusätzlichen FOV umfasst.

13. Endgerät, das einen Prozessor und einen Speicher umfasst, der Anweisungen speichert, die von dem Prozessor ausgeführt werden können, wobei, wenn die Anweisungen von dem Prozessor ausgeführt werden, der Prozessor so konfiguriert wird, dass er das Verfahren nach einem der Ansprüche 1 bis 10 durchführt.

14. Server, der einen Prozessor und einen Speicher umfasst, der Anweisungen speichert, die von dem Prozessor ausgeführt werden können, wobei, wenn die Anweisungen von dem Prozessor ausgeführt werden, der Prozessor so konfiguriert wird, dass er das Verfahren nach einem der Ansprüche 11 bis 12 durchführt.

## Revendications

1. Méthode pour un dispositif de terminal d'utilisateur demandant une vidéo panoramique, comprenant :
le fait de demander à un serveur d'acquérir une description de présentation de média qui comprend des informations de type champ de vision, FOV ;
le fait de demander (101) au serveur d'acquérir un premier fichier vidéo panoramique basé sur la description de présentation de média ; et
lors de la détection d'un changement d'angle de visualisation de l'utilisateur, la méthode étant **caractérisée par** :
la détermination d'un type de FOV du premier fichier vidéo panoramique (503), dans laquelle le type de FOV du premier fichier vidéo panoramique comprend au moins l'un des suivants :
le premier fichier vidéo panoramique n'a pas de FOV prédéterminé
le premier fichier vidéo panoramique a un FOV auxiliaire prédéterminé ;
le premier fichier vidéo panoramique a un FOV primaire prédéterminé ; ou
le premier fichier vidéo panoramique a le FOV primaire prédéterminé et le FOV auxiliaire ;
dans laquelle, si le premier fichier vidéo panoramique a un FOV auxiliaire, ou un FOV primaire, ou un FOV primaire et un FOV auxiliaire, le fait de demander (102) au serveur, selon le type de FOV du premier fichier vidéo panoramique et le changement de l'angle de visualisation de l'utilisateur, un second fichier vidéo panoramique ou un fichier vidéo FOV auxiliaire du premier fichier vidéo panoramique ;
dans laquelle la demande (102), selon le type de FOV du premier fichier vidéo panoramique et le changement de l'angle de visualisation de l'utilisateur, au serveur d'acquérir le second fichier vidéo panoramique (509) ou le fichier vidéo FOV auxiliaire du premier fichier vidéo panoramique (505) comprend :
la demande en un seul flux, dans un cas où le premier fichier vidéo panoramique a le FOV primaire prédéterminé ; ou
la demande en de multiples flux, dans un cas où le premier fichier vidéo panoramique a le FOV auxiliaire prédéterminé.

2. Méthode de transmission d'une vidéo panoramique selon la revendication 1, dans laquelle la demande, selon le type de FOV du premier fichier vidéo panoramique et le changement de l'angle de visualisation de l'utilisateur, au serveur d'acquérir le second fichier vidéo panoramique ou le fichier vidéo FOV auxiliaire du premier fichier vidéo panoramique comprend :
si le premier fichier vidéo panoramique a le FOV auxiliaire prédéterminé, et une variance de l'angle de visualisation de l'utilisateur est supérieure à un premier seuil, la demande au serveur d'acquérir le fichier vidéo FOV auxiliaire du premier fichier vidéo panoramique.

3. Méthode de transmission d'une vidéo panoramique selon la revendication 1, dans laquelle la demande, selon le type de FOV du premier fichier vidéo panoramique et le changement de l'angle de visualisation de l'utilisateur, au serveur d'acquérir le second fichier vidéo panoramique ou le fichier vidéo FOV auxiliaire du premier fichier vidéo panoramique comprend :
si le premier fichier vidéo panoramique a le FOV primaire prédéterminé, et une variance de l'angle de visualisation de l'utilisateur est supérieure à un deuxième seuil, la demande au serveur d'acquérir le second fichier vidéo panoramique.

4. Méthode de transmission d'une vidéo panoramique selon la revendication 1, dans laquelle la demande, selon le type de FOV du premier fichier vidéo panoramique et le changement de l'angle de visualisation de l'utilisateur, au serveur d'acquérir le second fichier vidéo panoramique ou le fichier vidéo FOV auxiliaire du premier fichier vidéo panoramique comprend :
si le premier fichier vidéo panoramique a le FOV primaire prédéterminé et le FOV auxiliaire, et une variance de l'angle de visualisation de l'utilisateur est inférieure à un deuxième seuil et supérieure ou égale à un troisième seuil, la demande au serveur d'acquérir le fichier vidéo FOV auxiliaire du premier fichier vidéo panoramique ; sinon, la demande au serveur d'acquérir le second fichier vidéo panoramique.

5. Méthode de transmission d'une vidéo panoramique selon la revendication 1, comprenant en outre :
la demande au serveur d'acquérir une description de présentation de média, dans laquelle la description de présentation de média comprend une correspondance entre l'angle de visualisation de l'utilisateur et un fichier vidéo, dans laquelle le fichier vidéo comprend un fichier vidéo panoramique et un fichier vidéo FOV auxiliaire.

6. Méthode de transmission d'une vidéo panoramique selon la revendication 5, dans laquelle la description de présentation de média comprend en outre une correspondance entre le fichier vidéo panoramique et le fichier vidéo FOV auxiliaire.

7. Méthode de transmission d'une vidéo panoramique selon la revendication 5, dans laquelle la demande au serveur d'acquérir le fichier vidéo FOV auxiliaire du premier fichier vidéo panoramique comprend :
lorsqu'une variance de l'angle de visualisation de l'utilisateur est supérieure à un premier seuil, le fait de déterminer qu'un angle de visualisation actuel de l'utilisateur est un premier angle de visualisation ; et
selon la correspondance entre l'angle de visualisation de l'utilisateur et le fichier vidéo, la demande au serveur d'acquérir le fichier vidéo FOV auxiliaire du premier fichier vidéo panoramique correspondant au premier angle de visualisation.

8. Méthode de transmission d'une vidéo panoramique selon la revendication 5, dans laquelle la demande au serveur d'acquérir le second fichier vidéo panoramique comprend :
lorsqu'une variance de l'angle de visualisation de l'utilisateur est supérieure ou égale à un deuxième seuil, le fait de déterminer qu'un angle de visualisation actuel de l'utilisateur est un deuxième angle de visualisation ; et
selon la correspondance entre l'angle de visualisation de l'utilisateur et le fichier vidéo, la demande au serveur d'acquérir le second fichier vidéo panoramique correspondant au deuxième angle de visualisation.

9. Méthode de transmission d'une vidéo panoramique selon la revendication 5, dans laquelle la demande au serveur d'acquérir le fichier vidéo FOV auxiliaire du premier fichier vidéo panoramique comprend :
lorsqu'une variance de l'angle de visualisation de l'utilisateur est inférieure à un deuxième seuil et supérieure ou égale à un troisième seuil, le fait de déterminer qu'un angle de visualisation actuel de l'utilisateur est un troisième angle de visualisation ; et
selon la correspondance entre l'angle de visualisation de l'utilisateur et le fichier vidéo, la demande au serveur d'acquérir le fichier vidéo FOV auxiliaire du premier fichier vidéo panoramique correspondant au troisième angle de visualisation.

10. Méthode de transmission d'une vidéo panoramique selon l'une quelconque des revendications 1 à 9, comprenant en outre :
lors de la demande au serveur d'acquérir le second fichier vidéo panoramique ou le fichier vidéo FOV auxiliaire du premier fichier vidéo panoramique, le transport dans la demande d'un point temporel de début de lecture du second fichier vidéo panoramique ou du fichier vidéo FOV auxiliaire du premier fichier vidéo panoramique.

11. Méthode pour la transmission par un serveur d'une vidéo panoramique, comprenant :
l'envoi (202) d'une description de présentation de média d'un fichier vidéo panoramique à un terminal sur la base d'une demande du terminal, dans laquelle la description de présentation de média comprend des informations de type champ de vision, FOV ; la méthode étant **caractérisée par** :
l'envoi (406) d'un fichier vidéo FOV sur la base d'une demande du terminal d'acquérir un fichier vidéo FOV correspondant à un angle de visualisation changé ou l'envoi (408) du fichier vidéo panoramique sur la base d'une demande du terminal d'acquérir un fichier vidéo panoramique correspondant à un angle de vue de lecture ;
dans laquelle le type de FOV du fichier vidéo panoramique comprend au moins l'un des suivants :
le fichier vidéo panoramique n'a pas de FOV prédéterminé ;
le fichier vidéo panoramique a un FOV auxiliaire prédéterminé ;
le fichier vidéo panoramique a un FOV primaire prédéterminé ; ou
le fichier vidéo panoramique a le FOV primaire prédéterminé et le FOV auxiliaire ;
dans laquelle l'envoi (406) du fichier vidéo FOV sur la base d'une demande du terminal d'acquérir un fichier vidéo FOV ou un fichier vidéo FOV auxiliaire correspondant à un angle de visualisation changé ou l'envoi (408) du fichier vidéo panoramique sur la base d'une demande du terminal d'acquérir un fichier vidéo panoramique correspondant à un angle de vue de lecture comprend :
l'envoi en un seul flux, dans un cas où le fichier vidéo panoramique a le FOV primaire prédéterminé ; ou
l'envoi en de multiples flux, dans un cas où le fichier vidéo panoramique a le FOV auxiliaire prédéterminé.

12. Méthode de transmission d'une vidéo panoramique selon la revendication 11, dans laquelle la description de présentation de média comprend en outre une correspondance entre le fichier vidéo panoramique et le fichier vidéo FOV auxiliaire.

13. Terminal, comprenant un processeur et une mémoire stockant des instructions exécutables par le processeur, dans lequel lorsque les instructions sont exécutées par le processeur, le processeur est configuré pour effectuer la méthode selon l'une quelconque des revendications 1 à 10.

14. Serveur, comprenant un processeur et une mémoire stockant des instructions exécutables par le processeur, dans lequel lorsque les instructions sont exécutées par le processeur, le processeur est configuré pour effectuer la méthode selon l'une quelconque des revendications 11 à 12.
